# FASCICULE DE BREVET EUROPEEN

(11) **EP 0 798 167 B1**
(45) Date de publication et mention de la délivrance du brevet: **02.01.2002**
(21) Numéro de dépôt: 97400272.7
(22) Date de dépôt: 06.02.1997
(51) Int. Cl.: B60R 16/02

(54) **Boîtier de connexion pour faisceaux électriques de véhicule automobile**
Verbindungsgehäuse für elektrische Kabelbäume eines Fahrzeuges
Connection box for electrical harnesses of a motor vehicle

(30) Priorité: 28.03.1996 FR 9603902
(43) Date de publication de la demande: 01.10.1997
(73) Titulaire: AUTOMOBILES PEUGEOT, 75116 Paris (FR); AUTOMOBILES CITROEN, 92200 Neuilly-sur-Seine (FR)
(72) Inventeur: Auffret, Michel, 91600 Savigny sur Orge (FR)
(74) Mandataire: Thinat, Michel

(56) Documents cités:
- EP-A- 0 334 343
- EP-A- 0 399 895
- DE-A- 4 409 183
- US-A- 5 426 831

## Description

La présente invention concerne un boîtier de connexion pour faisceaux électriques de véhicule automobile.

Selon l'art antérieur, on utilisait uniquement une platine en une matière suffisamment rigide, par exemple métallique, pour assurer un bon maintien des faisceaux électriques et d'éléments qui leur sont associés, comme des connecteurs par exemple.

Cependant, cette solution connue a pour inconvénient majeur qu'elle risque d'endommager les fils des faisceaux électriques soit lors du montage de la platine, soit ultérieurement par usure, de sorte qu'il est alors nécessaire de prévoir des fixations et des protections particulières.

EP-A-0399895 décrit un boîtier de connexion conforme au préamble de la revendication 1 et comportant une platine de servitude associée au tableau de bord d'un véhicule automobile, où un faisceau de véhicule est relié à la platine par des connecteurs mâles et femelles dans le plan de la platine.

Cette platine connue pose les mêmes problèmes que la solution connue décrite précédemment.

L'invention a pour but de réaliser un boîtier de connexion pour faisceaux électriques de véhicule automobile à monter sur la planche de bord de celui-ci et qui élimine les risques d'agression pour les fils tout en étant facile à monter et utilisant au mieux l'espace disponible.

A cet effet, le boîtier de connexion pour faisceaux électriques de véhicule automobile selon l'invention comprend les caractéristiques exposées dans la revendication 1.

La platine et le couvercle précités sont réalisés dans le même matériau, de préférence une matière plastique telle que du polypropylène.

L'ensemble formant boîtier précité a une forme lui permettant d'accueillir certains éléments situés au niveau de la planche de bord et cet ensemble présente des passages ou espaces lui permettant d'accueillir l'un au moins des éléments suivants : conduit diffuseur d'air, gaine de traversée de tablier, colonne de direction, pédale, renfort de la colonne de direction.

Les passages ou espaces précités sont ménagés essentiellement sur le couvercle du boîtier.

L'ensemble formant boîtier précité présente également des découpes destinées à recevoir des éléments électriques tels que relais, fusibles, connecteurs, prise diagnostic et, de préférence, ces découpes sont ménagées sur la platine.

Cette platine est située du côté de l'habitacle du véhicule.

L'ensemble formant boîtier précité comprend au moins une patte élastique assurant le maintien de l'insonorisant de la planche de bord du véhicule et est fixé sur le support de colonne de direction de celui-ci.

La platine et le couvercle comprennent des pattes de fixation de l'ensemble formant boîtier au support de colonne de direction.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'une planche de bord destinée à être montée dans un véhicule automobile et équipée du boîtier de connexion conforme à l'invention ;
- la figure 2 est une vue en perspective de l'équipement comportant notamment le boîtier de connexion de l'invention et monté dans la planche de bord de la figure 1 ;
- la figure 3 est une vue suivant la flèche III en figure 2 de la platine du boîtier de connexion de l'invention ;
- la figure 4 est une vue en arrière de la platine suivant la flèche IV de la figure 3 ;
- la figure 5 est une vue en perspective suivant la flèche V de la figure 2 du couvercle du boîtier de connexion de l'invention ;
- la figure 6 est une vue en perspective de côté suivant la flèche VI du couvercle de la figure 5 ;
- la figure 7 est une vue en perspective semblable à celle de la figure 5 avec la platine assemblée au couvercle du boîtier de connexion ;
- la figure 8 est une vue semblable à celle de la figure 3 avec le couvercle assemblé à la platine du boîtier de connexion ;
- la figure 9 est une vue en perspective de côté du boîtier de connexion suivant la flèche IX de la figure 8 ;
- la figure 10 est une vue en perspective de côté du boîtier de connexion suivant la flèche X de la figure 7.
- la figure 11 est une vue en perspective montrant, en cours de montage, le tablier et le plancher du véhicule vus de l'intérieur de celui-ci, le faisceau avant étant en place sur le tablier.

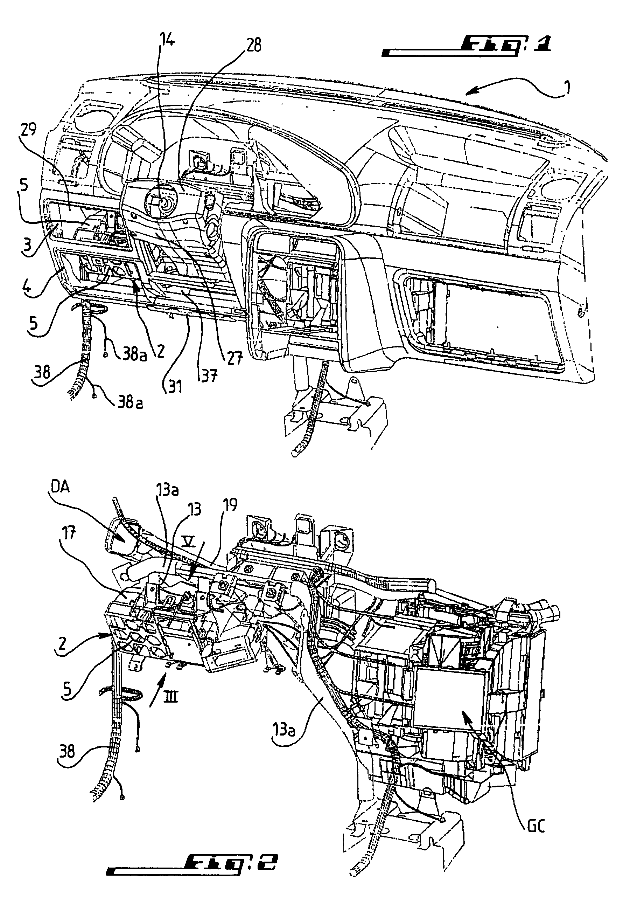

En se reportant tout d'abord à la figure 1, la référence 1 désigne d'une manière générale une planche de bord destinée à être montée dans un véhicule automobile. La planche de bord 1 comprend un certain nombre d'ouvertures et de passages destinés à recevoir divers éléments de la planche et dont seuls ceux représentés dans la partie gauche de la figure 1 seront discutés en liaison avec le boîtier de connexion pour faisceaux électriques de l'invention.

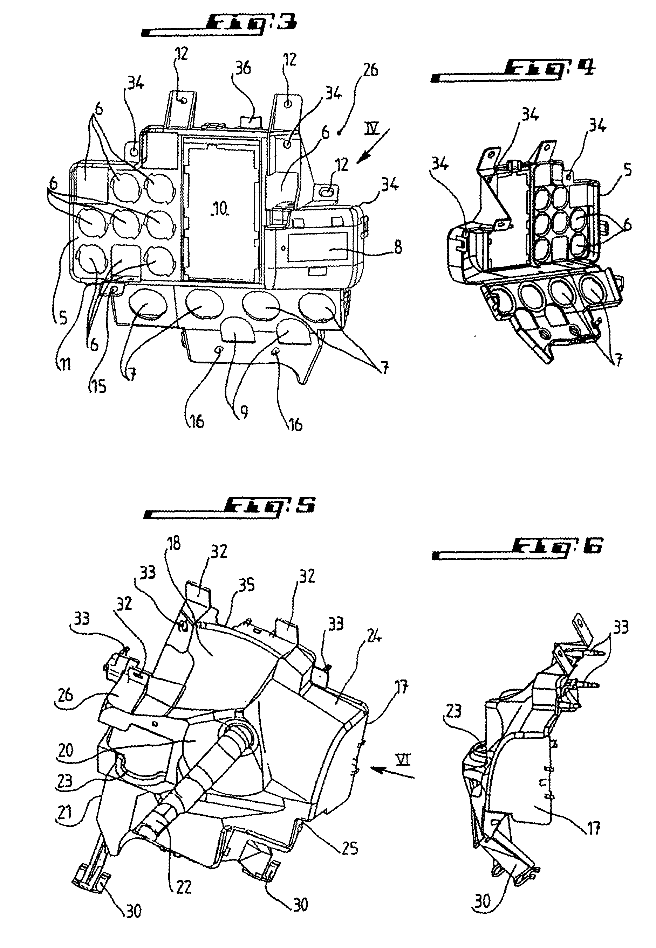

Ce boîtier de connexion porte la référence 2 et est intégré à la planche de bord 1 du véhicule comme cela est visible au travers de deux fenêtres rectangulaires parallèles 3, 4 totalement à gauche de la planche 1. La figure 2 montre le boîtier de connexion 2 faisant partie de l'équipement intégré dans la planche de bord 1, cet équipement comprenant notamment un diffuseur d'air DA pour le conducteur du véhicule et un groupe de chauffage GC de l'habitacle du véhicule.

Le boîtier de connexion 2 comprend une platine 5 réalisée en un matériau rigide, de préférence une matière plastique telle que du polypropylène, et dans laquelle sont ménagées des découpes destinées à recevoir des éléments électriques situés au niveau de la planche de bord 1 comme cela va être maintenant expliqué.

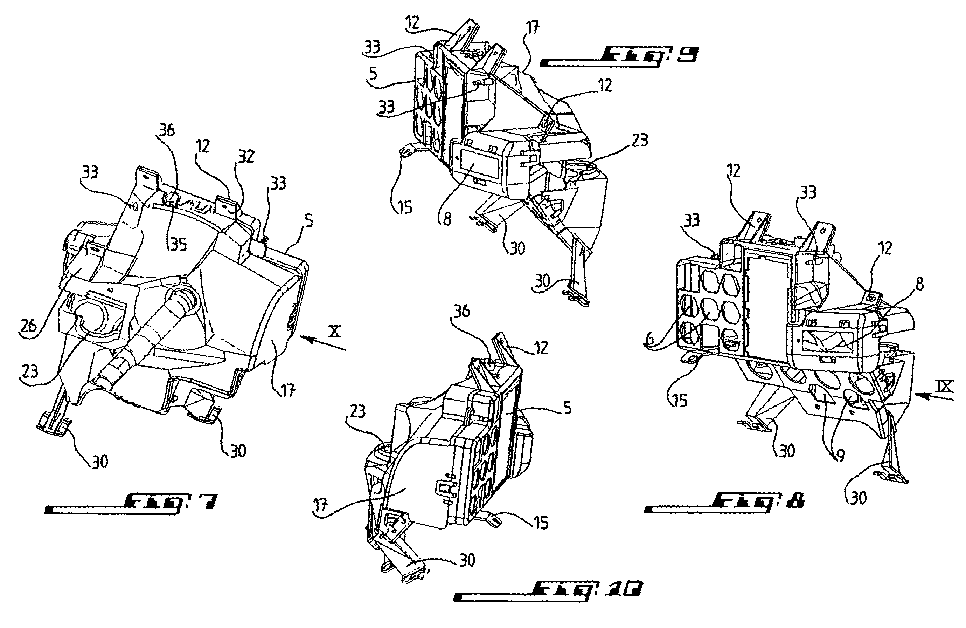

Tout d'abord, la platine 5 comprend une pluralité de découpes 6 (fig. 3), dans le cas présent au nombre de onze, et destinées à la fixation de supports de relais (non représentés). La platine 5 comprend également des découpes 7, dans le cas présent au nombre de quatre, destinées à la fixation d'un nombre correspondant de connecteurs de jonction du faisceau électrique avant. Ce faisceau sera défini ultérieurement. La platine 5 comprend de plus une fenêtre rectangulaire horizontale 8 destinée à recevoir une prise de diagnostic ainsi que deux passages 9 de connecteurs de puissance destinés à des éléments du véhicule consommant beaucoup d'énergie, tels que par exemple le démarreur. La platine 5 comprend également une fenêtre rectangulaire verticale 10 destinée à recevoir une boîte à fusibles et la référence 11 concerne le passage d'alimentation arrière.

La platine 5 comprend également trois pattes 12 de fixation de celle-ci au support 13 de la colonne de direction 14 ainsi qu'une patte de fixation 15 de la platine 5 sur la planche de bord 1. En 16 sont représentées deux fixations des connecteurs de puissance passant dans les passages 9.

La platine 5 est située du côté de l'habitacle du véhicule avec sa face avant en figure 3 dirigée vers le conducteur.

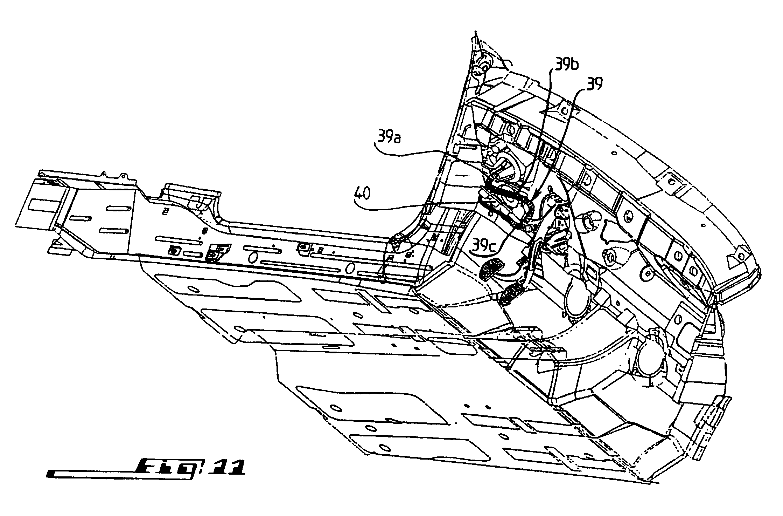

Le boîtier 2 comprend également, comme représenté notamment en figure 5, un couvercle 17 pouvant être fixé à la platine 5 et présentant un passage ou canal 18 du conduit 19 du diffuseur d'air DA vers le conducteur du véhicule, un passage ou canal passe-gaine 20 de traversée de tablier, un passage 21 de la pédale d'embrayage du véhicule, un canal 22 de passage du faisceau avant, un passage 23 de sortie du faisceau d'alimentation de la planche de bord ou faisceau habitacle et un canal 24 de fixation du renfort 13a de la colonne de direction 14. Le faisceau d'alimentation de la planche de bord 1 ou "faisceau habitacle" alimente certains éléments de cette planche et de l'habitacle du véhicule. En 25 est indiqué le passage d'alimentation arrière complétant le passage d'alimentation arrière 11 de la platine 5 lorsque le couvercle 17 est fixé à celle-ci. Le couvercle 17 comprend également un passage ou canal 26 de la demi-gaine inférieure 27 de colonne de direction montée, avec la demi-gaine supérieure 28, sur la colonne de direction 14 (figure 1) pour supporter les commodos. En fait, la demi-gaine inférieure 27 supporte ces commodos et la demi-gaine supérieure 28 verrouille le tout à la colonne de direction 14.

Le boîtier 2, résultant de la fixation du couvercle 17 à la platine 5, laisse disponible en haut, à gauche de la fixation du boîtier 2 sur le renfort de support 13a de la colonne de direction 14, un emplacement 29 pour un vide-poches (figure 1).

Le couvercle 17 comprend également deux pattes élastiques 30 formant pinces de maintien de l'insonorisant 31 de la planche de bord 1 du véhicule. En 32 sont représentées trois pattes coopérant respectivement avec les trois pattes 12 de la platine 7 de façon à permettre la fixation du boîtier 2 ainsi constitué au support 13 de la colonne de direction 14. Pour permettre le positionnement correct du couvercle 17 relativement à la platine 5 avant leur fixation pour former le boîtier 2, le couvercle 17 comprend trois doigts de centrage 33 s'engageant respectivement dans trois trous de centrage 34 de la platine 5.

Le couvercle 17 comprend de plus une découpe 35 qui, lorsque le couvercle est assemblé à la platine 5, coopère avec une portion en saillie sensiblement semi-cylindrique 36 de la platine 5 de manière à constituer une sortie d'un faisceau dit "PUSCH" alimentant certains interrupteurs situés à droite de l'emplacement du vide-poches 29 en référence à la figure 1, devant les pattes de fixation 12, 32.

Une trappe, non représentée, en forme d'équerre, destinée à accéder aux fusibles, couvre les supports des relais fixés dans les découpes 6, la boîte à fusibles logée dans la fenêtre 10 et la prise diagnostic logée dans la fenêtre 8 de la platine 5. Plus précisément, cette trappe couvre la fenêtre 4 et une partie 37 de la planche de bord 1 (voir figure 1).

Les figures 1 et 2 montrent la présence du faisceau arrière 38 avec ses prises de masse 38a.

La figure 11 montre le faisceau avant 39 déjà monté sur le tablier, mais avant mise en place du boîtier. Pour plus de clarté, il est représenté pratiquement dans sa position définitive. Venant de l'avant du véhicule, il traverse le tablier et présente successivement une partie 39a logée dans le canal passe-gaine de tablier 20, une partie 39 b qui longe le canal de passage 22 et une partie 39c qui passe sous le boîtier et arrive aux connecteurs 40.

Les figures 7 à 10 montrent sous différents angles le boîtier 2 résultant de la fixation du couvercle 17 à la platine 5 et représentent ainsi plus clairement les découpes, passages, canaux, pattes de fixation et autres éléments du couvercle 17 et de la platine 5 définis précédemment.

Une fois effectué le positionnement des faisceaux électriques du véhicule relativement à la platine et au couvercle 17, le boîtier 2 est fermé par fixation du couvercle 17 à la platine 5 et le boîtier est ensuite fixé sur le support de la colonne de direction. La platine 5 et le couvercle 17 constituent en quelque sorte deux "demi-coquilles" ayant une forme leur permettant de s'intégrer à la planche de bord afin d'intégrer des éléments ou de participer à des fonctions de la planche de bord. Le boîtier conforme à l'invention permet d'éliminer l'inconvénient des solutions connues antérieurement, qui sont composées d'une platine sans couvercle aboutissant souvent à des fils électriques pincés, coupés, mal positionnés ou en contrainte et imposant des protections et des fixations des fils électriques fixés sur ces platines généralement en tôle donc agressives. Selon l'invention, le fait de mettre un couvercle en une matière plastique, telle que du polypropylène, permet d'utiliser la même matière pour la platine et donc de supprimer les protections et les fixations utilisées dans les solutions connues antérieurement. Les différentes dérivations qui sont aménagées pratiquement par moitié sur la platine et le couvercle du boîtier permettent de canaliser les sorties des faisceaux électriques. Par ailleurs, il est possible de faire livrer ce boîtier par un fournisseur sans risque d'agression pour les faisceaux électriques. Enfin, le boîtier conforme à l'invention représente un gain d'environ 40 % en poids par rapport à la platine en tôle utilisée antérieurement avec un coût de réalisation plus réduit de ce boîtier par rapport aux solutions antérieures.

## Revendications

1. Boîtier de connexion pour faisceaux électriques de véhicule automobile, comprenant deux parties (5, 17), respectivement une platine (5) destinée à recevoir certains éléments électriques de la planche de bord (1) du véhicule et un couvercle (17) assemblés l'un à l'autre pour constituer un ensemble apte à être intégré à la planche de bord (1) et à accueillir l'ensemble des faisceaux électriques de celui-ci, notamment le faisceau avant (39), le faisceau arrière (38) et le faisceau habitacle, **caractérisé en ce que** chacun de ces faisceaux est en partie logé dans l'ensemble formant boîtier.

2. Boîtier selon la revendication 1, **caractérisé en ce que** la platine (5) et le couvercle (17) précités sont réalisés dans le même matériau, de préférence une matière plastique telle que du polypropylène.

3. Boîtier selon la revendication 1 ou 2, **caractérisé en ce que** l'ensemble formant boîtier a des parties conformées de façon que certains éléments situés au niveau de la planche de bord (1) puissent s'y loger.

4. Boîtier selon la revendication 3, **caractérisé en ce que** l'ensemble (2) précité présente des passages ou espaces lui permettant d'accueillir l'un au moins des éléments suivants : conduit diffuseur d'air (19), gaine de traversée de tablier, colonne de direction (14), pédale, renfort de la colonne de direction.

5. Boîtier selon la revendication 4, **caractérisé en ce que** la plupart des passages ou espaces précités se trouvent sur le couvercle (17).

6. Boîtier selon l'une des revendications précédentes, **caractérisé en ce que** l'ensemble (2) précité présente des découpes (6, 7, 8, 9) destinées à recevoir des éléments électriques tels que relais, fusibles, connecteurs, prise diagnostic.

7. Boîtier selon la revendication 6, **caractérisé en ce que** les découpes précitées sont ménagées sur la platine (5).

8. Boîtier selon l'une des revendications précédentes, **caractérisé en ce que** la platine (5) est située du côté de l'habitacle du véhicule.

9. Boîtier selon l'une des revendications précédentes, **caractérisé en ce que** l'ensemble (2) précité comprend au moins une patte élastique (30) assurant le maintien de l'insonorisant (31) de la planche de bord (1) du véhicule.

10. Boîtier selon l'une des revendications précédentes, **caractérisé en ce que** l'ensemble (2) précité est fixé sur le support (13) de colonne de direction.

11. Boîtier selon la revendication 10, **caractérisé en ce que** la platine (5) et le couvercle (17) comprennent des pattes (12, 32) de fixation de l'ensemble (2) précité au support de colonne de direction.

## Claims

1. Connection box for electrical harnesses of a motor vehicle, comprising two parts (5, 17), respectively a plate (5) provided to receive some electrical elements of the vehicle dashboard (1) and a cover (17), assembled together for forming an assembly able to be integrated to the dashboard (1) and to accept all the electrical harnesses thereof, in particular the front harness (39), the rear harness (38) and the passenger compartment harness, **characterized in that** each of these harnesses is housed in part in the box forming assembly.

2. Box according to claim 1, **characterized in that** the pre-mentioned plate (5) and cover (17) are made of the same material, preferably a plastic material such as polypropylene.

3. Box according to claim 1 or 2, **characterized in that** the box forming assembly has parts so shaped as some of the elements located at the level of the dashboard (1) may be housed therein.

4. Box according to claim 3, **characterized in that** the pre-mentioned assembly (2) is provided with passages or spaces enabling it to accept one at least of the following elements : air diffusing duct (19), cowl passage sheath, steering column (14), pedal, steering column reinforcing member.

5. Box according to claim 4, **characterized in that** most of the pre-mentioned passages or spaces are found in the cover (17).

6. Box according to one of the preceding claims, **characterized in that** the pre-mentioned assembly (2) is provided with cuts (6, 7, 8, 9) designed to receive electrical elements such as relays, fuses, connectors, diagnostic sockets.

7. Box according to claim 6, **characterized in that** the pre-mentioned cuts are provided in the plate (5).

8. Box according to one of the preceding claims, **characterized in that** the plate (5) is located on the side of the vehicle passenger compartment.

9. Box according to one of the preceding claims, **characterized in that** the pre-mentioned assembly (2) comprises at least one resilient tab (30) for maintaining the sound absorbing element (31) of the vehicle dashboard (1).

10. Box according to one of the preceding claims, **characterized in that** the pre-mentioned assembly (2) is fixed onto the steering column support (13).

11. Box according to claim 10, **characterized in that** the plate (5) and the cover (17) comprise lugs (12, 32) for fixing the pre-mentioned assembly (2) to the steering column support.

## Patentansprüche

1. Verbindungsgehäuse für elektrische Kabelbäume eines Fahrzeugs, umfassend zwei Teile (5, 17), jeweils eine Grundplatte (5), die zur Aufnahme bestimmter elektrischer Elemente des Instrumentenbretts (1) des Fahrzeugs bestimmt ist, und einen Deckel (17), die jeweils zusammengebaut sind, um einen Aufbau zu bilden, der geeignet ist, in das Instrumentenbrett (1) integriert zu werden und den Aufbau der elektrischen Kabelbäume desselben aufzunehmen, insbesondere den vorderen Baum (39), den hinteren Baum (38) und den Kabelbaum des Karosseriegehäuses, **dadurch gekennzeichnet, daß** jeder dieser Kabelbäume teilweise im das Gehäuse bildenden Aufbau untergebracht ist.

2. Gehäuse gemäß Anspruch 1, **dadurch gekennzeichnet, daß** die vorgenannte Grundplatte (5) und der vorgenannte Deckel (17) aus demselben Material hergestellt sind, bevorzugt aus einem Plastikmaterial wie zum Beispiel Polypropylen.

3. Gehäuse gemäß Anspruch 1 oder 2, **dadurch gekennzeichnet, daß** der das Gehäuse bildende Aufbau angepaßte Teile derart hat, daß bestimmte, sich auf der Höhe des Instrumentenbretts (1) befindende Elemente dort untergebracht werden können.

4. Gehäuse gemäß Anspruch 3, **dadurch gekennzeichnet, daß** der vorgenannte Aufbau (2) Durchgänge oder Räume aufweist, die es ihm ermöglichen, wenigstens eines oder mehrere folgender Elemente aufzunehmen: Luftverteilerkanal (19), Ummantelung des Windlaufs, Lenksäule (14), Pedale, Verstärkung der Lenksäule.

5. Gehäuse gemäß Anspruch 4, **dadurch gekennzeichnet, daß** die meisten vorgenannten Durchgänge oder Räume sich auf dem Deckel (17) befinden.

6. Gehäuse gemäß einem der vorgenannten Ansprüche, **dadurch gekennzeichnet, daß** der vorgenannte Aufbau (2) Ausschnitte (6, 7, 8, 9) aufweist, die dazu bestimmt sind, elektrische Elemente, wie zum Beispiel Relais, Sicherungen, Verbindungsstecker, Diagnosesteckdosen aufzunehmen

7. Gehäuse gemäß Anspruch 6, **dadurch gekennzeichnet, daß** die vorgenannten Ausschnitte in der Grundplatte (5) ausgespart sind.

8. Gehäuse gemäß einem der vorgenannten Ansprüche, **dadurch gekennzeichnet, daß** die Grundplatte (5) sich auf der Seite des Karosseriegehäuses des Fahrzeugs befindet.

9. Gehäuse gemäß einem der vorgenannten Ansprüche, **dadurch gekennzeichnet, daß** der vorgenannte Aufbau (2) wenigstens eine elastische Klause (30) umfaßt, die den Halt des Schalldämpfers (31) des Instrumentenbretts (1) des Fahrzeugs gewährleistet.

10. Gehäuse gemäß einem der vorgenannten Ansprüche, **dadurch gekennzeichnet, daß** der vorgenannte Aufbau (2) auf der Halterung (13) der Lenksäule befestigt ist.

11. Gehäuse gemäß Anspruch 10, **dadurch gekennzeichnet, daß** die Grundplatte (5) und der Deckel (17) Klauen (12, 32) zur Befestigung des vorgenannten Aufbaus (2) an der Halterung der Lenksäule umfassen.
